# FASCICULE DE BREVET EUROPEEN

(11) **EP 4 410 712 B1**
(45) Date de publication et mention de la délivrance du brevet: **14.05.2025**
(21) Numéro de dépôt: 24154550.8
(22) Date de dépôt: 29.01.2024
(51) Int. Cl.: B65G 1/07, B65G 7/00, B66F 7/06, B66F 9/18, B66F 7/28

(54) **TABLE ÉLÉVATRICE DE MANUTENTION À AJUSTEMENT AUTOMATIQUE DE NIVEAU**
HUBTISCH ZUR HANDHABUNG MIT AUTOMATISCHER NIVEAUEINSTELLUNG
LIFTING TABLE WITH AUTOMATIC LEVEL ADJUSTMENT

(30) Priorité: 31.01.2023 FR 2300877; 31.01.2023 FR 2300873
(43) Date de publication de la demande: 07.08.2024
(73) Titulaire: 1A Machines et Ingenierie Speciales, 26800 Étoile-sur-Rhône (FR)
(72) Inventeur: VAIRO, Olivier, 69007 LYON (FR)
(74) Mandataire: Opilex

(56) Documents cités:
- US-A1- 2011 309 228
- US-B2- 7 383 923
- ANONYMOUS: "PalletPal Walkie Mobile Leveler", TAYLORMHC.COM, 30 September 2019 (2019-09-30), pages 1 - 1, XP093073583, Retrieved from the Internet <URL:https://taylormhc.com/wp-content/uploads/2019/09/PalletPal-Walkie-Mobile-Leveler.pdf> [retrieved on 20230814]
- ANONYMOUS: "PalletPal Walkie PALLET TRUCK ATTACHMENT IMPROVES ERGONOMICS OF ORDER PICKING", WWW.SVSEQ.COM, 25 March 2020 (2020-03-25), pages 1 - 1, XP093073591, Retrieved from the Internet <URL:https://www.svseq.com/userfiles/cms/subpage/documents/9/SVS-WEB-PalletPal-Walkie.pdf> [retrieved on 20230814]
- ANONYMOUS: "Table élévatrice à ressorts: PalletPal 360(TM)", MARCOLIFT.COM, 11 June 2019 (2019-06-11), pages 1 - 2, XP093073559, Retrieved from the Internet <URL:https://marcolift.com/wp-content/uploads/2019/06/PalletPall_Fra_Marco4.pdf> [retrieved on 20230814]
- ANONYMOUS: "Manuel d'utilisation MJ525 Table élévatrice hydraulique mobile de style à ciseau 1000 kg (2200 lb)", WWW.KLETON.COM, 20 May 2007 (2007-05-20), pages 1 - 5, XP093073602, Retrieved from the Internet <URL:https://www.kleton.com/pdfs/french/MJ525-manual.pdf> [retrieved on 20230814]

## Description

L'invention concerne le domaine de la manutention de paquets ou objets, et en particulier le domaine des tables élévatrices ou tables de mise à niveau destinées à collecter ou distribuer ces paquets et conçues pour être gerbables par des chariots élévateurs ou des gerbeurs.

Des tables élévatrices connues comprennent un plateau coulissant verticalement par rapport à un châssis posé au sol. Le châssis comporte un espace sous une structure porteuse, permettant de passer des fourches basses fixes et des fourches d'élévation du chariot pour procéder à l'élévation de la table et permettre son déplacement, avec ou sans charge. Un ou plusieurs ressorts verticaux sont interposés entre la structure porteuse et le plateau pour permettre une adaptation du niveau du plateau en fonction de sa charge par leur déformation élastique progressive. Une telle table s'avère donc particulièrement ergonomique pour permettre à des manipulateurs de charger et décharger des paquets. Au vu des charges que doit supporter la table élévatrice, la structure porteuse présente des traverses métalliques d'une certaine section, impliquant un encombrement vertical non négligeable. Ainsi, la capacité de chargement en volume d'une telle table élévatrice s'avère relativement limitée.

Par ailleurs, une telle table élévatrice ne permet pas la mise en place d'un chariot par ses deux faces longitudinales, ce qui peut s'avérer gênant dans certaines situations.

Le dispositif "PalletPal Walkie Mobile Leveler" de Taylor MHC, consultable en ligne à partir du 30 septembre 2019 à l'adresse https://taylormhc.com/wp-content/uploads/2019/09/ PalletPal-Walkie-Mobile-Leveler.pdf, divulgue une table élévatrice à ajustement automatique selon le préambule de la revendication 1. Ce même dispositif était divulgué par Silicon Valley Shelving & Equipment Co., Inc. à l'adresse https://www.svseq.com/userfiles/cms/subpage/ documents/9/SVS-WEB-PalletPal-Walkie.pdf et mis en ligne à partir du 25 mars 2020.

La société Marco AB a mis en ligne le 11 juin 2019 un autre modèle de table élévatrice selon le préambule de la revendication 1, consultable à l'adresse https://marcolift.com/wp-content/ uploads/2019/06/PalletPall_Fra_Marco4.pdf.

Enfin, les documents US 7 383 923 B2 et US 2011/309228 A1 divulguent eux aussi des tables élévatrices de manutention à ajustement automatique similaires à ces modèles.

L'invention vise à résoudre un ou plusieurs de ces inconvénients. L'invention porte ainsi sur une table élévatrice de manutention à ajustement automatique de niveau, telle que définie dans la revendication 1 annexée.

L'invention porte également sur les variantes des revendications dépendantes.

D'autres caractéristiques et avantages de l'invention ressortiront clairement de la description qui en est faite ci-après, à titre indicatif et nullement limitatif, en référence aux dessins annexés, dans lesquels :
[Fig.1] est une vue en perspective d'une table élévatrice de manutention à ajustement automatique de niveau selon un premier exemple d'un mode de réalisation de l'invention ;
[Fig.2] est une vue en coupe en perspective de la table élévatrice de manutention de la figure 1 au niveau d'une poutre arrière ;
[Fig.3] est une vue en perspective d'une table élévatrice de manutention à ajustement automatique de niveau selon un deuxième exemple d'un mode de réalisation de l'invention ;
[Fig.4] est une vue en perspective de détail de la table élévatrice de la figure 3 au niveau d'un système de bridage de course;
[Fig.5] est une vue en perspective de détail de la table élévatrice de la figure 3 au niveau d'un système de verrouillage/déverrouillage ;
[Fig.6] est une vue en perspective d'une table élévatrice de manutention à ajustement automatique de niveau selon un troisième exemple d'un mode de réalisation de l'invention ;
[Fig.7] est une vue en perspective d'une table élévatrice de manutention à ajustement automatique de niveau selon un quatrième exemple d'un mode de réalisation de l'invention ;
[Fig.8] est une vue en perspective illustrant le logement avantageux des ciseaux latéraux dans les longerons latéraux de la table en position repliée.

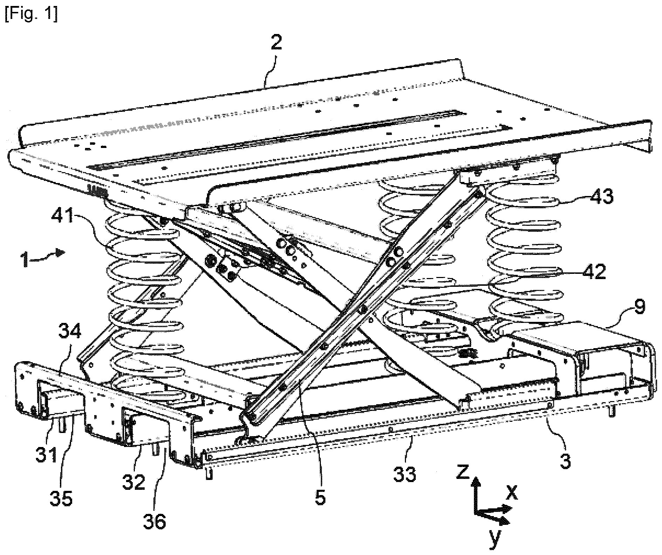

La figure 1 est une vue en perspective d'une table élévatrice de manutention à ajustement automatique de niveau 1 selon un premier exemple de mode de réalisation de l'invention. La table 1 comprend un plateau 2, une structure porteuse 3 et un ressort vertical 41.

La structure porteuse 3 comporte des premier, deuxième et troisième longerons parallèles 31 à 33. Ces longerons 31 à 33 s'étendent selon une direction longitudinale X. Ces longerons 31 à 33 servent le cas échéant à former des appuis au sol de la table 1, assurer sa rigidité en flexion autour d'un axe transversal Y et assurer la liaison entre des poutres transversales.

La structure 3 comporte au moins une poutre 34 s'étendant selon la direction transversale Y et solidarise les longerons 31 à 33 au niveau d'une première extrémité longitudinale. Des première et deuxième ouvertures 35 et 36 sont ménagées sous la poutre transversale 34 entre les premier et deuxième longerons 31 et 32 d'une part et entre les deuxième et troisième longerons 32 et 33 d'autre part. Les ouvertures 35 et 36 servent à laisser un passage longitudinal pour des fourches d'un chariot élévateur pour pouvoir déplacer la table 1 vers un autre emplacement et pour permettre le passage des fourches basses lors du chargement avec un gerbeur. La poutre transversale 34 permet à la fois de solidariser les longerons 31 à 33 et à former une interface de levage pour les fourches d'un chariot élévateur ou une interface de stabilisation pour les fourches d'un gerbeur.

En particulier, les premier, deuxième et troisième longerons 31, 32, 33 ont une structure creuse ouverte, par exemple de type profilé. Une telle structure creuse ouverte a par exemple une section en U ou en L.

Le deuxième longeron 32 est ici en position centrale et comporte une section en U ouverte vers le haut. Le ressort vertical 41 comporte une première extrémité sollicitant le plateau 2 et une deuxième extrémité sollicitant le deuxième longeron 32. L'effort élastique fourni par le ressort 41 est proportionnel à la charge appliquée sur le plateau 2 et permet d'adapter automatiquement le niveau selon la direction verticale Z du plateau 2 en fonction de la charge. Ce système assure donc une fonction d'ergonomie, permettant à un manipulateur de charger le plateau 2 toujours à un niveau satisfaisant, quelle que soit la charge déjà appliquée sur le plateau 2. La deuxième extrémité du ressort 41 est logée dans le deuxième longeron 32 entre les première et deuxième ouvertures 35 et 36, grâce à la section en U ouverte vers le haut de ce longeron 32. La deuxième extrémité du ressort 41 est ainsi logée entre des flancs verticaux de ce longeron 32 et une partie du ressort peut ainsi être logée à proximité du sol, de part et d'autre des zones de passage des fourches. L'encombrement vertical du ressort 41 peut ainsi être réduit, ce qui permet de disposer d'une plus grande course pour le plateau 2 et ainsi permettre un plus grand chargement dans des conditions de bonne ergonomie. Par ailleurs, le plateau 2 peut être rapproché du sol en condition de charge, ce qui assure une plus grande stabilité.

Dans la variante illustrée, les longerons latéraux 31, 33 ont une structure creuse ouverte vers le haut, plus préférentiellement avec une section en L avec une lame inférieure et une lame interne.

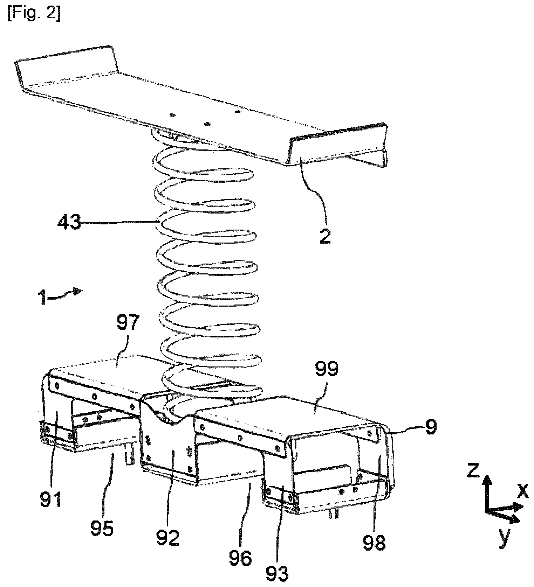

Par ailleurs, la structure 3 comporte une poutre 9 s'étendant selon la direction transversale Y et solidarisant les longerons 31 à 33 au niveau d'une deuxième extrémité longitudinale. La figure 2 est une vue en coupe en perspective de la table 1 au niveau de la poutre 9. Des ouvertures 95 et 96 sont ménagées sous la poutre transversale 9 entre les premier et deuxième longerons 31 et 32 d'une part et entre les deuxième et troisième longerons 32 et 33 d'autre part. Les ouvertures 95 et 96 servent à laisser un passage longitudinal pour des fourches d'un chariot élévateur et pour permettre le passage des fourches basses lors du chargement avec un gerbeur. La poutre transversale 9 permet à la fois de solidariser les longerons 31 à 33 et à former une interface de levage pour les fourches d'un chariot élévateur ou une interface de stabilisation pour les fourches d'un gerbeur, par un côté opposé aux ouvertures 35 et 36. Les ouvertures 95 et 96 sont bien entendu laissées libres d'accès pour ne pas interférer avec un passage de fourches.

La poutre 9 comporte ici des parois verticales 93 et 98 solidaires du longeron 33, des parois verticales (seule la paroi 92 est illustrée) solidaires du longeron 32 et des parois verticales (seule la paroi 91 est illustrée) solidaires du longeron 31. Afin de rigidifier la poutre 9 et ainsi la structure 3 :
- les parois verticales des longerons 32 et 33 sont mutuellement solidarisées par l'intermédiaire d'une tôle 99 à section en forme de U ;
- les parois verticales des longerons 31 et 32 sont mutuellement solidarisées par l'intermédiaire d'une tôle 97 à section en forme de U. Cette structure de la poutre 9 permet de compenser l'absence d'une poutre transversale supplémentaire.

Dans l'exemple illustré aux figures 1 et 2, la table élévatrice 1 comprend également un mécanisme de ciseaux latéral 5 guidant le plateau 2 en coulissement selon la direction verticale Z. Ce mécanisme de ciseaux 5 comprend deux bras ayant chacun une extrémité fixée soit au plateau 2, soit au longeron 33, et une extrémité coulissant longitudinalement soit par rapport au plateau 2, soit par rapport au longeron 33. Les bras sont ici montés pivotants l'un par rapport à l'autre autour d'un axe transversal.

Dans la variante illustrée, l'extrémité inférieure des bras de ciseaux 51, 52 est logée dans la partie creuse en L des longerons latéraux 31, 33. Plus précisément, les bras de ciseaux 51, 52 rabattus sont logés dans la partie creuse en L des longerons latéraux 31, 33. Ainsi, le gain de place est maximisé dans cette variante lorsque la table est repliée, de sorte à en limiter au maximum l'épaisseur. Elle peut avantageusement avoir une hauteur de 160 mm en position repliée.

Dans l'exemple illustré ici, la table 1 comprend plusieurs ressorts verticaux 41, 42 et 43 alignés selon la direction longitudinale X et ayant leur deuxième extrémité sollicitant le deuxième longeron 32 et logée dans le deuxième longeron entre les première et deuxième ouvertures 35 et 36 ou entre les ouvertures 95 et 96. On peut ainsi disposer d'une plus grande raideur de ressort et répartir l'effort élastique sur la direction longitudinal.

Dans l'exemple illustré ici, les longerons 31, 32 et 33 comportent une face inférieure destinée à former une surface d'appui au sol.

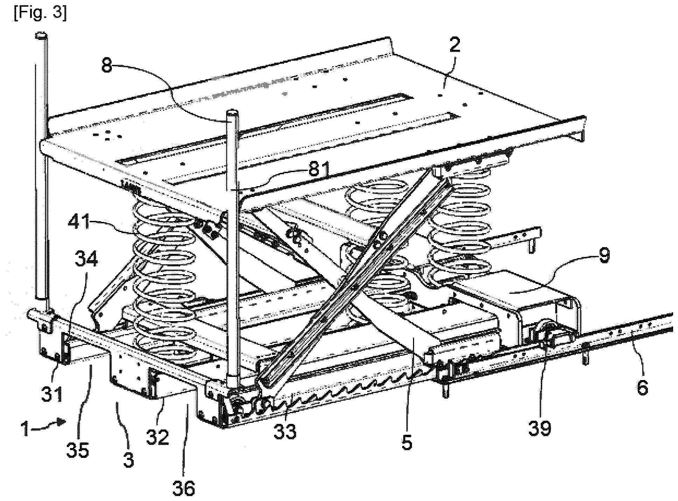

La figure 3 est une vue en perspective d'un deuxième exemple de mode de réalisation d'une table 1. Les longerons 31 à 33 sont ici avantageusement munis de roulettes 39 configurées pour permettre le roulage de la table élévatrice 1. Les roulettes 39 permettent d'assurer un déplacement, par exemple un coulissement longitudinal de la table 1 pour faciliter son chargement par une simple avancée si la table 1 est positionnée dans un rayonnage. Les roulettes 39 sont ici disposées aux extrémités longitudinales des longerons 31 à 33. La poutre 9 présente la même structure que dans l'exemple des figures 1 et 2.

La table 1 de la figure 3 est avantageusement intégrée dans un système incluant un rail de guidage 6 (le système inclut ici deux rails positionnés de part et d'autre de la table 1). Le rail de guidage 6 assure le guidage en coulissement longitudinal du longeron 33. Un tel rail de guidage 6 s'avère particulièrement avantageux pour permettre des avancées/reculs d'une table 1 dans un rayonnage d'un entrepôt.

Avantageusement, la table élévatrice 1 de la figure 3 comprend une poignée de préhension 8 (ici positionnée au-dessus du niveau du plateau 2) pour faciliter sa manipulation par un opérateur, par exemple pour simplement réaliser son coulissement longitudinal. La poignée 8 est solidarisée à la structure porteuse 3 au niveau de la première extrémité longitudinale du longeron 33. Une poignée similaire est solidarisée à la première extrémité longitudinale du longeron 31. La poignée 8 est ici solidarisée à la structure porteuse 3 par l'intermédiaire d'un tube 81.

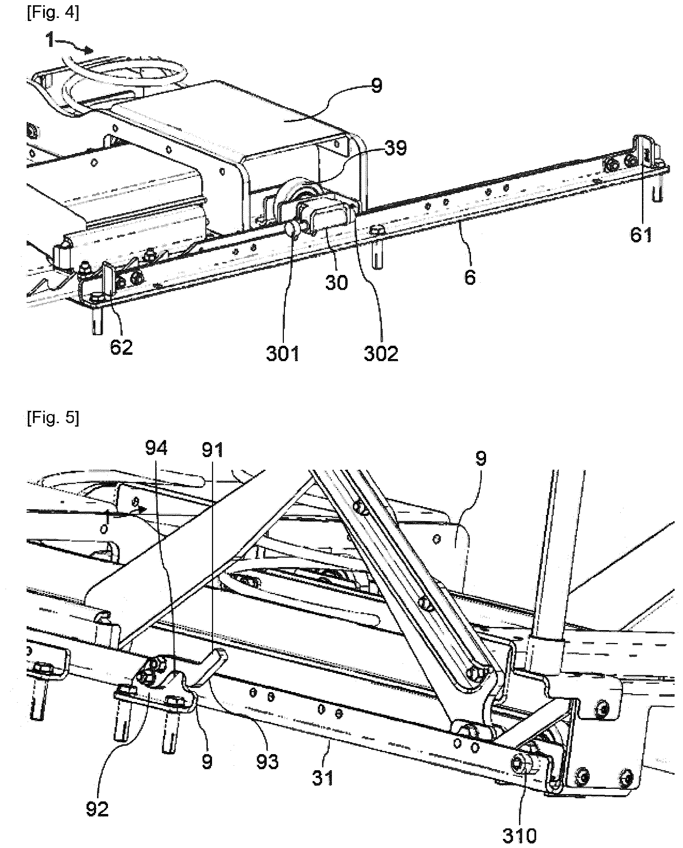

Avantageusement, le rail 6 est muni d'une butée avant 62 et d'une butée arrière 61 (visibles sur la vue de détail de la figure 4) pour brider le coulissement de la table 1. Les butées avant 62 et arrière 61 sont configurées pour interférer avec une cale 30 solidaire de la structure porteuse 3. En plaçant les butées avant 62 et arrière 61 sur le rail 6 (et donc latéralement plutôt que dans l'encombrement longitudinal de la structure 3), on peut accroître la course de la table 1 par rapport au rail 6.

La cale 30 comporte avantageusement des tampons avant et arrière 301 et 302, entre lesquels un système de ressort longitudinal est interposé. Le système de ressort permet soit d'amortir le mouvement de rentrée de la table 1, soit de faciliter le mouvement de sortie de la table 1. Les tampons 301 et 302 sont destinés à interférer respectivement avec les butées 62 et 61.

La figure 5 illustre un mécanisme 9 de verrouillage ou de libération de la table 1 par rapport au rail 6. La table 1 est munie d'un ergot 310 en saillie transversalement par rapport au longeron 31, au niveau de sa partie avant. Le mécanisme de verrouillage comporte une manette 91, montée pivotante par rapport à une embase 92 ancrée dans le sol. La manette 91 comporte une saillie de préhension 93 destinée à la faire pivoter lors d'une sollicitation. La manette 91 comporte par ailleurs une encoche 94, destinée à venir en prise avec l'ergot 310. Lorsqu'on recule la table 1, l'ergot 310 vient interférer avec la saillie 93, fait pivoter la manette 91 et vient s'insérer dans l'encoche 94 pour verrouiller la table 1 en position rentrée. Pour libérer la table 1, l'opérateur soulève la saillie 93 pour libérer l'ergot 310 de l'encoche 94.

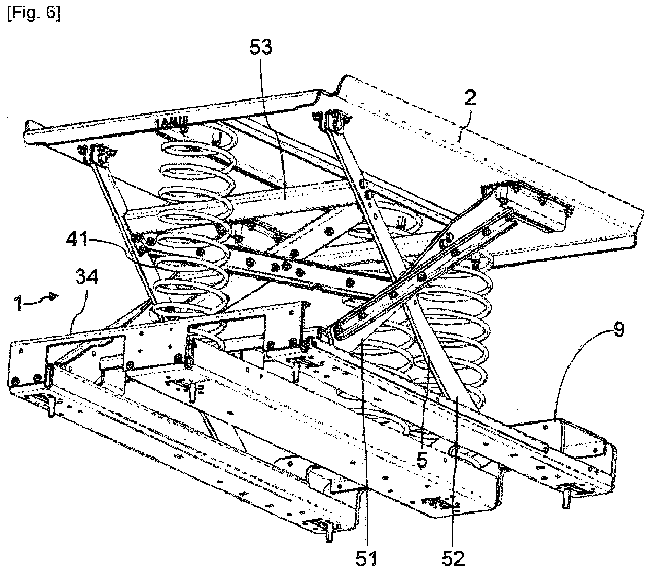

La figure 6 est une vue en perspective d'un troisième exemple de mode de réalisation d'une table 1. La table élévatrice 1 comprend ici des ciseaux 5 positionnés aux extrémités transversales du plateau 2. Les ciseaux 5 comportent chacun deux bras 51 et 52 tels que décrits auparavant. Afin de rigidifier la structure des bras des deux ciseaux sont solidarisés par l'intermédiaire d'une structure de traverse 53. La structure de traverse 53 peut comprendre une ou plusieurs poutrelles orientées transversalement, croisées et/ou inclinées par rapport à la direction transversale, afin de rigidifier la liaison entre la structure porteuse 3 et le plateau 2.

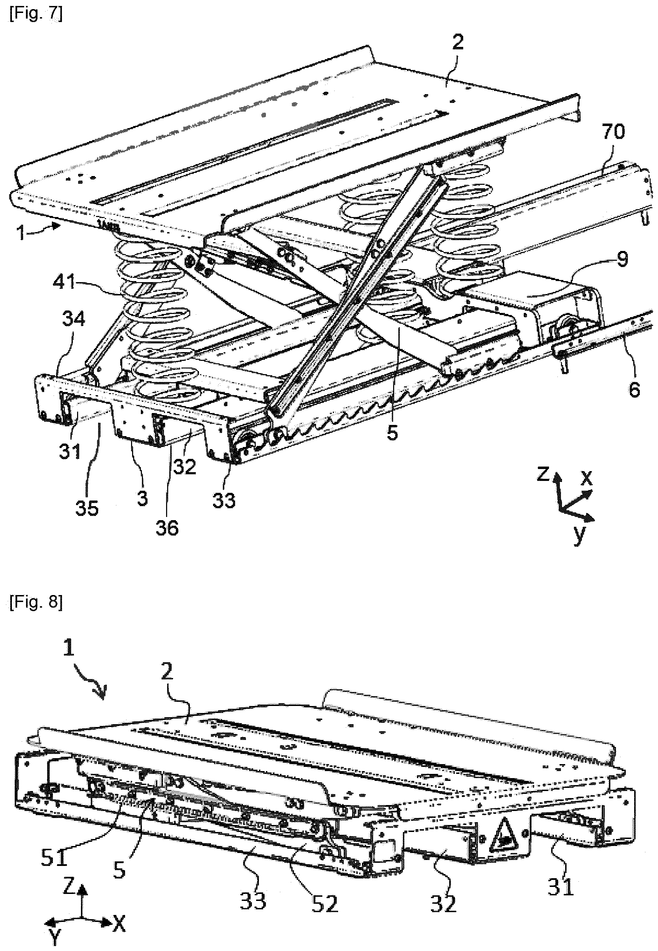

La figure 7 est une vue en perspective d'une table élévatrice de manutention à ajustement automatique de niveau selon un quatrième exemple d'un mode de réalisation de l'invention. Dans cet exemple, le mouvement de rentrée et/ou sortie de la table 1 est obtenu au moyen d'un vérin pneumatique 70, sollicitant la structure porteuse 3 longitudinalement.

## Revendications

1. Table élévatrice de manutention à ajustement automatique de niveau (1), **caractérisée en ce qu'**elle comprend :
- un plateau (2) ;
- une structure porteuse (3) comportant des premier (31), deuxième (32) et troisième (33) longerons parallèles s'étendant selon une direction longitudinale (X), comportant des première et deuxième poutres (34, 9) s'étendant selon une direction transversale (Y) et solidarisant les premier, deuxième et troisième longerons au niveau de première et deuxième extrémités longitudinales respectivement, des première et deuxième ouvertures (35, 36) étant ménagées sous la première poutre (34) entre les premier et deuxième longerons d'une part et entre les deuxième et troisième longerons d'autre part, des troisième et quatrième ouvertures (95, 96) étant ménagées sous la deuxième poutre (9) entre les premier et deuxième longerons d'une part et entre les deuxième et troisième longerons d'autre part, les première à quatrième ouvertures étant configurées pour permettre l'insertion d'une fourche de chariot ;
- un ressort vertical (41) comportant une première extrémité sollicitant le plateau (2) et **caractérisé en ce que** ledit ressort vertical (41) comporte également une deuxième extrémité sollicitant le deuxième longeron et logée dans le deuxième longeron, ledit deuxième longeron (32) comportant une section en U ouverte vers le haut.

2. Table élévatrice de manutention à ajustement automatique de niveau (1) selon la revendication 1, comprenant au moins un système de ciseaux latéral (5) guidant le plateau (2) en coulissement selon la direction verticale (Z).

3. Table élévatrice de manutention à ajustement automatique de niveau (1) selon la revendication 1 ou 2, comprenant plusieurs ressorts verticaux (41, 42) alignés selon la direction longitudinale (X) et ayant leur deuxième extrémité sollicitant le deuxième longeron (32) et logée dans le deuxième longeron.

4. Table élévatrice de manutention à ajustement automatique de niveau (1) selon l'une quelconque des revendications précédentes, dans laquelle les premier à troisième longerons (31, 32, 33) comportent une face inférieure destinée à former une surface d'appui au sol.

5. Table élévatrice de manutention à ajustement automatique de niveau (1) selon l'une quelconque des revendications 1 à 3, dans laquelle les premier et troisième longerons (31, 33) sont munis de roulettes (39) configurées pour permettre le roulage de la table élévatrice (1).

6. Table élévatrice de manutention à ajustement automatique de niveau (1) selon l'une quelconque des revendications précédentes, comprenant une poignée de préhension (8) positionnée au dessus du niveau du plateau (2) et solidarisée à la structure porteuse (3) au niveau de la première extrémité longitudinale d'un desdits longerons.

7. Table élévatrice de manutention à ajustement automatique de niveau (1) selon l'une quelconque des revendications 2 à 6, dans laquelle le mécanisme de ciseaux latéral (5) comprend, de chaque côté latéral, deux bras latéraux (51, 52) ayant chacun une extrémité inférieure fixée à un longeron latéral (31, 33), **caractérisée en ce que** les longerons latéraux (31, 33) ont une section en U ou en L ouverte vers le haut logeant les extrémités inférieures des bras (51, 52) des ciseaux latéraux (5).

8. Table élévatrice de manutention à ajustement automatique de niveau (1) selon la revendication précédente, **caractérisée en ce que** ladite section en U ou en L ouverte vers le haut loge les bras (51, 52) des ciseaux latéraux (5) lorsqu'ils sont repliés.

9. Système de manutention comprenant :
- une table élévatrice selon l'une quelconque des revendications précédentes ;
- au moins un rail de guidage (6) du troisième longeron (33) en coulissement selon la direction longitudinale.

10. Système de manutention selon la revendication 9, comprenant en outre un système de verrouillage du coulissement de la table (1) par rapport au rail de guidage (6).

11. Système de manutention selon la revendication 9 ou 10, comprenant en outre un système de bridage (61, 62) de la course de la table (1) par rapport au rail (6).

12. Système de manutention selon la revendication 9, dans lequel la structure porteuse (3) comprend un élément configuré pour interférer avec le système de bridage, le système de manutention comprenant en outre un mécanisme d'amortissement configuré pour amortir le mouvement de la structure porteuse (3) lorsque ledit élément approche du système de bridage.

## Patentansprüche

1. Hubtisch zur Handhabung mit automatischer Niveaueinstellung (1), **dadurch gekennzeichnet, dass** er Folgendes umfasst:
- eine Platte (2);
- eine Tragstruktur (3), umfassend einen ersten (31), einen zweiten (32) und einen dritten (33) parallelen Längsträger, die sich in einer Längsrichtung (X) erstrecken, umfassend einen ersten und einen zweiten Träger (34, 9), die sich in einer Querrichtung (Y) erstrecken und den ersten, zweiten und den dritten Längsträger an einem ersten bzw. zweiten Längsende fest miteinander verbinden, wobei eine erste und eine zweite Öffnung (35, 36) unter dem ersten Träger (34) zwischen dem ersten und dem zweiten Längsträger einerseits und zwischen dem zweiten und dem dritten Längsträger andererseits ausgebildet sind, wobei eine dritte und eine vierte Öffnungen (95, 96) unter dem zweiten Träger (9) zwischen dem ersten und dem zweiten Längsträger einerseits und zwischen dem zweiten und dem dritten Längsträger andererseits ausgebildet sind, wobei die erste bis vierte Öffnung konfiguriert sind, um das Einführen einer Gabelstaplergabel zu ermöglichen;
- eine vertikale Feder (41), umfassend ein erstes Ende, das die Platte (2) vorspannt, und **dadurch gekennzeichnet, dass** die vertikale Feder (41) auch ein zweites Ende umfasst, das den zweiten Längsträger vorspannt und in dem zweiten Längsträger untergebracht ist, der zweite Längsträger (32) umfassend einen nach oben offenen U-förmigen Abschnitt.

2. Hubtisch zur Handhabung mit automatischer Niveaueinstellung (1) nach Anspruch 1, umfassend mindestens ein seitliches Scherensystem (5), das die Platte (2) beim Gleiten in der vertikalen Richtung (Z) führt.

3. Hubtisch zur Handhabung mit automatischer Niveaueinstellung (1) nach Anspruch 1 oder 2, umfassend mehrere vertikale Federn (41, 42), die entlang der Längsrichtung (X) ausgerichtet sind und deren zweites Ende den zweiten Längsträger (32) vorspannt und in dem zweiten Längsträger untergebracht ist.

4. Hubtisch zur Handhabung mit automatischer Niveaueinstellung (1) nach einem der vorherigen Ansprüche, wobei der erste bis dritte Längsträger (31, 32, 33) eine Unterseite umfassen, die dazu bestimmt ist, eine Bodenaufstandsfläche zu bilden.

5. Hubtisch zur Handhabung mit automatischer Niveaueinstellung (1) nach einem der Ansprüche 1 bis 3, wobei der erste und der dritte Längsträger (31, 33) mit Rollen (39) versehen sind, die konfiguriert sind, um das Rollen des Hubtischs (1) zu ermöglichen.

6. Hubtisch zur Handhabung mit automatischer Niveaueinstellung (1) nach einem der vorherigen Ansprüche, umfassend einen Handgriff (8), der oberhalb des Niveaus der Platte (2) positioniert und auf Höhe des ersten Längsendes eines der Längsträger fest mit der Tragstruktur (3) verbunden ist.

7. Hubtisch zur Handhabung mit automatischer Niveaueinstellung (1) nach einem der Ansprüche 2 bis 6, wobei der seitliche Scherenmechanismus (5) an jeder seitlichen Seite zwei seitliche Arme (51, 52) umfasst, wovon jeder ein unteres Ende aufweist, das an einem seitlichen Längsträger (31, 33) befestigt ist, **dadurch gekennzeichnet, dass** die seitlichen Längsträger (31, 33) einen nach oben offenen U- oder L-förmigen Abschnitt aufweisen, der die unteren Enden der Arme (51, 52) der seitliche Scheren (5) aufnimmt.

8. Hubtisch zur Handhabung mit automatischer Niveaueinstellung (1) nach dem vorherigen Anspruch, **dadurch gekennzeichnet, dass** der nach oben offene U- oder L-förmige Abschnitt die Arme (51, 52) der seitliche Schere (5) aufnimmt, wenn sie zusammengefaltet sind.

9. Handhabungssystem, umfassend:
- einen Hubtisch nach einem der vorherigen Ansprüche;
- mindestens eine Führungsschiene (6) des dritten Längsträgers (33) beim Gleiten in der Längsrichtung.

10. Handhabungssystem nach Anspruch 9, ferner umfassend ein Verriegelungssystem der Gleitbewegung des Tischs (1) in Bezug auf die Führungsschiene (6).

11. Handhabungssystem nach Anspruch 9 oder 10, ferner umfassend ein Flanschsystem (61, 62) des Hubs des Tisches (1) in Bezug auf die Schiene (6).

12. Handhabungssystem nach Anspruch 9, wobei die Tragstruktur (3) ein Element umfasst, das konfiguriert ist, um mit dem Flanschsystem zu interferieren, das Handhabungssystem ferner umfassend einen Dämpfungsmechanismus, der konfiguriert ist, um die Bewegung der Tragstruktur (3) zu dämpfen, wenn sich das Element dem Flanschsystem nähert.

## Claims

1. A lifting table with automatic level adjustment (1), **characterised in that** it comprises:
- a tray (2);
- a supporting structure (3) comprising a first (31), second (32) and third (33) frame rail extending in a longitudinal direction (X), comprising first and second beams (34, 9) extending in a transverse direction (Y) and securing the first, second and third frame rails at the first and second longitudinal ends respectively, first and second openings (35, 36) being provided under the first beam (34) between the first and second frame rails on the one hand and between the second and third frame rails on the other hand, third and fourth openings (95, 96) being provided under the second beam (9) between the first and second frame rails on the one hand and between the second and third frame rails on the other hand, the first to fourth openings being configured to allow the insertion of a trolley fork;
- a vertical spring (41) comprising a first end contacting the tray (2) and **characterized in that** said vertical spring (41) also comprises a second end contacting the second frame rail and housed in the second frame rail, said second frame rail (32) comprising a U-shaped section having an open upper face.

2. A lifting table with automatic level adjustment (1) according to Claim 1, comprising at least one lateral scissor system (5) guiding the tray (2) to slide in the vertical direction (Z).

3. A lifting table with automatic level adjustment (1) according to Claim 1 or 2, comprising a plurality of vertical springs (41, 42) aligned in the longitudinal direction (X) having their second end contacting the second frame rail (32) and housed in the second frame rail.

4. A lifting table with automatic level adjustment (1) according to any of the preceding Claims, wherein the first to third longitudinal frame rails (31, 32, 33) comprise a lower face for forming a ground support surface.

5. A lifting table with automatic level adjustment (1) according to any one of Claims 1 to 3, wherein the first and third frame rails (31, 33) are fitted with casters (39) configured to allow the lifting table (1) to roll.

6. A lifting table with automatic level adjustment (1) according to any of the preceding Claims, comprising a gripping handle (8) positioned above the level of the tray (2) and secured to the supporting structure (3) at the first longitudinal end of one of said frame rails.

7. A lifting table with automatic level adjustment (1) according to any one of Claims 2 to 6, wherein the lateral scissor mechanism (5) comprises, on each lateral side, two lateral arms (51, 52) each having a lower end fixed to a lateral frame rail (31, 33), **characterized in that** the lateral frame rails (31, 33) have a U-shaped or L-shaped section having an open upper face to accommodate the lower ends of the arms (51, 52) of the lateral scissors (5).

8. A lifting table with automatic level adjustment (1) according to the preceding Claim, **characterized in that** said U- or L-shaped section has an open upper face to accommodate the arms (51, 52) of the lateral scissors (5) when they are folded.

9. A handling system comprising:
- a lifting table according to any one of the preceding Claims;
- at least one guide rail (6) of the third frame rail (33) sliding in the longitudinal direction.

10. A handling system according to Claim 9, further comprising a system for locking the sliding of the table (1) with respect to the guide rail (6).

11. A handling system according to Claim 9 or 10, further comprising a system (61, 62) for clamping the travel of the table (1) with respect to the rail (6).

12. A handling system of Claim 9, wherein the supporting structure (3) comprises an component configured to interact with the clamping system, the handling system further comprising a damping mechanism configured to dampen the movement of the supporting structure (3) when said component approaches the clamping system.
